(19) Europäisches Patentamt
European Patent Office
Office européen des brevets

(11) **EP 4 256 415 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21819810.9**

(22) Anmeldetag: **24.11.2021**

(51) Internationale Patentklassifikation (IPC):
***G05D 1/00*** *(2024.01)*

(52) Gemeinsame Patentklassifikation (CPC):
**G05D 1/102**

(86) Internationale Anmeldenummer:
**PCT/EP2021/082813**

(87) Internationale Veröffentlichungsnummer:
**WO 2022/117411 (09.06.2022 Gazette 2022/23)**

(54) **VERFAHREN ZUM STEUERN EINER DROHNE ENTLANG EINES SCHACHTS**

CONTROL METHOD OF A DRONE ALONG A HOISTWAY

PROCEDE DE COMMANDE D'UN DRONE DANS UNE CAGE D'ASCENCEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2020 EP 20211465**

(43) Veröffentlichungstag der Anmeldung:
**11.10.2023 Patentblatt 2023/41**

(73) Patentinhaber: **INVENTIO AG**
**6052 Hergiswil (CH)**

(72) Erfinder:
• **BITZI, Raphael**
**6005 Luzern (CH)**
• **STUDER, Christian**
**6010 Kriens (CH)**

(74) Vertreter: **Inventio AG**
**Seestrasse 55**
**6052 Hergiswil (CH)**

(56) Entgegenhaltungen:
EP-A1- 3 739 420        JP-A- 2017 128 440
JP-A- 2017 226 259

**Beschreibung**

Die vorliegende Erfindung betrifft ein Verfahren zum Steuern einer Drohne entlang eines Schachts. Des Weiteren betrifft die Erfindung ein Steuergerät, ein Computerprogramm und ein computerlesbares Medium zum Ausführen des genannten Verfahrens. Ferner betrifft die Erfindung ein Drohnensteuerungssystem mit einem solchen Steuergerät und eine Aufzugsanlage mit mindestens einer Drohne, die mit einem solchen Drohnensteuerungssystem ausgestattet ist.

Eine Drohne, etwa in Form eines Quadrocopters, kann beispielsweise mit einem satellitengestützten Navigationssystem ausgestattet sein, das eine teil- oder vollautomatisierte Steuerung der Drohne ermöglicht. Unter bestimmten Bedingungen kann der Empfang des Satellitensignals jedoch eingeschränkt sein, etwa beim Fliegen der Drohne innerhalb von Gebäuden. Indoor-Drohnen, die sich speziell für den Einsatz in Gebäuden eignen, können daher mit einer Bildsensorik zum Erfassen ihrer Umgebung ausgestattet sein. Oftmals ist die Umgebung, in der eine solche Indoor-Drohne fliegen soll, vorab nicht bekannt. Zur Navigation kann deshalb beispielsweise eine digitale Karte aus den Bildern der Bildsensorik generiert werden. Hierzu sind in der Regel relativ aufwendige Bildverarbeitungsalgorithmen erforderlich.

Drohnen können beispielsweise zur kameragestützten Inspektion von Industrieanlagen oder Schächten verwendet werden. Ein Beispiel für eine mit einer Kamera ausgestattete Drohne zur Inspektion eines Schachts ist in EP 3 489 184 A1 beschrieben. Dabei wird die Drohne beim Fliegen entlang des Schachts durch eine sich vertikal entlang des Schachts erstreckende mechanische Führungsvorrichtung mechanisch geführt.

Die JP 2017 226259 A und EP 3 739 420 A1 beschreiben Verfahren zum Steuern einer Drohne entlang eines Schachts, bei welchen die Drohnen in einem festlegbaren Abstand zur einer Schachtwand fliegen.

Die JP 2017 128440 A beschreibt ein Verfahren zum Steuern einer Drohne entlang eines Aufzugschachts zur Inspektion des Aufzugschachts.

Es kann ein Bedarf an einem Verfahren zum Steuern einer Drohne entlang eines Schachts bestehen, mit dem die Drohne ohne zusätzliche mechanische Führungen und/oder mit einer vergleichsweise einfachen Steuerungselektronik teil- oder vollautomatisiert entlang des Schachts gesteuert werden kann. Hierdurch können die Kosten für die Bereitstellung einer solchen Drohne deutlich reduziert werden. Eine derart vereinfachte Steuerungselektronik bietet zudem den Vorteil einer höheren Robustheit. Ferner kann ein Bedarf an einem Steuergerät, einem Computerprogrammprodukt und einem computerlesbaren Medium zum Durchführen des Verfahrens, an einem mit einem solchen Steuergerät konfigurierten Drohnensteuerungssystem sowie an einer mit einem solchen Drohnensteuerungssystem konfigurierten Aufzugsanlage bestehen.

Einem solchen Bedarf kann durch den Gegenstand eines der unabhängigen Ansprüche entsprochen werden. Vorteilhafte Ausführungsformen sind in den abhängigen Ansprüchen und in der nachfolgenden Beschreibung definiert.

Ein erster Aspekt der Erfindung betrifft ein Verfahren zum Steuern einer Drohne entlang eines Schachts. Der Schacht weist zumindest eine erste Schachtwand und eine an die erste Schachtwand angrenzende zweite Schachtwand auf. Die Drohne weist eine Sensorik zum Erfassen einer Umgebung und/oder eines Flugzustands der Drohne, eine Aktorik zum Steuern der Drohne und ein Steuergerät zum Ansteuern der Aktorik auf. Das Verfahren umfasst zumindest die folgenden Schritte: Empfangen von Sensordaten, die durch die Sensorik erzeugt wurden, in dem Steuergerät; Bestimmen von Istabständen der Drohne relativ zur ersten Schachtwand und zur zweiten Schachtwand durch Verarbeiten der Sensordaten; und Erzeugen eines Steuersignals zum Ansteuern der Aktorik, sodass die Drohne entlang des Schachts fliegt, basierend auf einer Abweichung der Istabstände von Sollabständen und einer Sollflugstrecke, die die Drohne bis zum Erreichen einer Zielposition im Schacht zurücklegen soll. Eine Istflugstrecke der Drohne wird durch Verarbeiten der Sensordaten bestimmt. Dabei wird das Steuersignal basierend auf einer Abweichung der Istflugstrecke von der Sollflugstrecke erzeugt.

Erfindungsgemäss werden Türbereiche und optional Höhenmarkierungen im Schacht durch Verarbeiten der Sensordaten erkannt. Dabei wird die Istflugstrecke basierend auf den durch Verarbeiten der Sensordaten erkannten Türbereichen und optional zusätzlich basierend auf den durch Verarbeiten der Sensordaten erkannten Höhenmarkierungen bestimmt.

Die Türbereiche und/oder Höhenmarkierungen können beispielsweise durch Verarbeiten von durch die Sensorik erzeugten Bilddaten der Umgebung der Drohne erkannt werden. Durch diese Ausführungsform wird beispielsweise auch bei schwankendem Umgebungsdruck eine zuverlässige Erkennung der Istflughöhe der Drohne ermöglicht.

Das Verfahren kann beispielsweise automatisch durch einen Prozessor des Steuergeräts der Drohne ausgeführt werden.

Die hier und im Folgenden genannten Module des Steuergeräts können als Software und/oder Hardware implementiert sein.

Unter einer Drohne kann ein unbemanntes Luftfahrzeug, beispielsweise in Form eines Multicopters, verstanden werden. Möglich sind aber auch andere Ausführungen der Drohne. Die Drohne kann mit einer Steuersoftware zum teil- oder vollautomatisierten Ansteuern der Aktorik basierend auf den Sensordaten ausgestattet sein. Die Steuersoftware kann in einem Speicher des Steuergeräts gespeichert sein und durch den Prozessor des Steuergeräts ausgeführt werden.

Bei dem Schacht kann es sich beispielsweise um einen Aufzugsschacht, Lüftungsschacht oder Kabelschacht handeln. Der Schacht kann vertikal, horizontal und/oder schräg verlaufen. Die Anordnung bzw. Ausrichtung der Sensorik ist dabei auf den Verlauf des Schachts angepasst. Unter einer Sollflugstrecke kann eine Länge eines durch die Drohne zurückzulegenden Wegs bis zur Zielposition verstanden werden. Die Zielposition kann beispielsweise eine Umkehrposition sein, an dem eine Fortbewegungsrichtung der Drohne umgekehrt werden soll, etwa um die Drohne zurück zu einer Ausgangsposition zu bewegen. Im Fall eines vertikalen Schachts kann die Sollflugstrecke beispielsweise eine Sollflughöhe sein, die die Drohne maximal erreichen soll oder das Erreichen einer Markierung.

Die erste Schachtwand und die zweite Schachtwand können als längliche Seitenwände des Schachts aufgefasst werden, die an ihrer jeweiligen Längskante zusammenstossen.

Beispielsweise können die erste Schachtwand und die zweite Schachtwand orthogonal zueinander ausgerichtet sein. Zusätzlich kann der Schacht einen Boden, eine Decke, eine dritte Schachtwand und/oder eine vierte Schachtwand aufweisen. Es ist möglich, dass zumindest eine der Schachtwände eine oder mehrere Öffnungen, beispielsweise Lüftungs- oder Türöffnungen oder sonstige Zugangsöffnungen, aufweist.

Die Sensorik kann mindestens einen Umfeldsensor wie beispielsweise eine Kamera, einen Lidar-, Ultraschall- oder Radarsensor und/oder mindestens einen Flugdynamiksensor wie beispielsweise einen Beschleunigungs- oder Drehratensensor, etwa in Form einer inertialen Messeinheit, aufweisen. Darüber hinaus kann die Sensorik einen Luftdrucksensor zur Höhenmessung umfassen. Auch wenn es für die Ausführung des erfindungsgemässen Verfahrens nicht notwendig ist, kann die Sensorik zusätzlich einen Ortungssensor zur Bestimmung einer geografischen Position der Drohne mithilfe eines globalen Navigationssatellitensystems wie GPS, GLONASS o. Ä. aufweisen.

Von dem Flugdynamiksensor erzeugte Flugdynamikdaten können beispielsweise als Eingabedaten für eine Stabilitätsregelung zur Stabilisierung des Flugzustands der Drohne verwendet werden. Die abstands- bzw. flugstreckenbasierte Steuerung der Drohne kann von der Stabilitätsregelung überlagert sein.

Beispielsweise kann die Sensorik zur Bestimmung der Istabstände einen 2D-Abstandssensor in Form eines Lidarsensors umfassen. Der Lidarsensor kann beispielsweise eine um 360 Grad rotierbare Laseroptik zum Abtasten der Umgebung der Drohne aufweisen. Dabei kann eine Rotationsebene der Laseroptik senkrecht oder schräg zu einer Wandfläche der ersten Schachtwand und/oder der zweiten Schachtwand ausgerichtet sein. Eine schräge Ausrichtung hat den Vorteil, dass zusätzlich zu den Istabständen relativ zur ersten und zweiten Schachtwand ein Istabstand relativ zu einem Boden und/oder einer Decke des Schachts aus den Sensordaten bestimmt werden kann, ohne dass hierzu mehrere Sensoren erforderlich sind.

Alternativ kann die Sensorik zur Bestimmung der Istabstände mehrere 1D-Abstandssensoren, etwa in Form von Ultraschallsensoren oder Lidarsensoren, umfassen. Möglich ist aber auch eine Kombination aus einem 2D-Abstandssensor mit einem oder mehreren 1D-Abstandssensoren.

Die Sollabstände können beispielsweise unter Berücksichtigung einer gegebenen Breite und/oder Tiefe des Schachts ausgewählt worden sein. Ebenso kann beispielsweise die Sollflugstrecke unter Berücksichtigung einer gegebenen Höhe oder Länge des Schachts ausgewählt worden sein. Es ist möglich, dass die Sollabstände bzw. die Sollflugstrecke durch einen Benutzer der Drohne über eine entsprechende Benutzerschnittstelle in die Steuersoftware der Drohne eingegeben werden bzw. wird. Möglich ist aber auch eine automatische Einstellung der Sollabstände bzw. der Sollflugstrecke, etwa basierend auf einer geografischen Position der Drohne. Die Sollflugstrecke kann auch durch eine Markierung im Schacht gekennzeichnet sein, insbesondere kann die genannte Markierung die Ziel- oder Umkehrposition sein. Die Markierung kann von der Sensorik beispielsweise optisch erkannt werden.

Beispielsweise ist es möglich, dass die Sollabstände bzw. die Sollflugstrecke basierend auf Geometriedaten, die eine gegebene Geometrie des Schachts definieren, etwa dessen Breite, Tiefe und/oder Länge, bestimmt werden bzw. wird.

Die Geometriedaten können beispielsweise in dem Steuergerät von einer externen Datenspeichervorrichtung zum Speichern unterschiedlicher Geometriedaten bezüglich unterschiedlicher Schächte empfangen werden. Die externe Datenspeichervorrichtung kann beispielsweise ein zentraler Server, ein PC, ein Laptop, ein Smartphone, ein Tablet oder ein sonstiges mobiles Endgerät sein. Dabei können die Geometriedaten dem Steuergerät über eine kabelgebundene oder kabellose Datenverbindung, etwa über eine WLAN-, Bluetooth- oder Mobilfunkverbindung, bereitgestellt werden. Die unterschiedlichen Geometriedaten können alternativ auch in dem Speicher des Steuergeräts gespeichert sein.

Es wird darauf hingewiesen, dass es zum Steuern der Drohne entlang des Schachts nicht zwingend erforderlich ist, eine Istflugstrecke der Drohne zu bestimmen, beispielsweise eine Istflughöhe. Die Einhaltung der Sollflugstrecke kann beispielsweise auch dadurch sichergestellt werden, dass die Drohne entlang des Schachts entsprechend einem in Abhängigkeit von der Sollflugstrecke vordefinierten Geschwindigkeitsverlauf gesteuert wird. Beispielsweise können in dem Steuergerät unterschiedliche vordefinierte Geschwindigkeitsverläufe für unterschiedliche Sollflugstrecken hinterlegt sein. Alternativ kann der Geschwindigkeitsverlauf in Abhängigkeit von der Sollflugstrecke mit einer entsprechenden mathematischen Funktion berechnet werden. Es ist ebenfalls möglich, dass die Drohne von einem menschlichen Bediener ferngesteuert wird, der die Flughöhe, die Geschwindigkeit und/oder die Ausrichtung der Drohne einstellt und nur die Abstände zu den Schachtwänden automatisch eingestellt werden. Zusätzlich können Kollisionen mit dem Boden und der Decke des Schachts automatisch verhindert werden. Dies kann als ein semiautomatischer Betrieb bezeichnet werden.

Die Aktorik kann konfiguriert sein, um eine Position und/oder Orientierung der Drohne im dreidimensionalen Raum zu ändern. Hierzu kann die Aktorik einen oder mehrere Rotoren und einen oder mehrere Antriebsmotoren zum Antreiben des Rotors bzw. der Rotoren umfassen. Zusätzlich kann die Aktorik einen oder mehrere Servomotoren umfassen, etwa zum Ändern einer Ausrichtung der Rotoren. Die Rotoren können beispielsweise in ein und derselben Rotationsebene angeordnet sein. Möglich sind aber auch andere Antriebskonfigurationen.

Die Istflugstrecke kann beispielsweise als Istflughöhe basierend auf einem Istabstand der Drohne relativ zu einem Boden und/oder einer Decke des Schachts bestimmt werden. Die Istflughöhe kann aber auch aus Sensordaten eines Luftdrucksensors der Drohne bestimmt werden. Auch durch diese Ausführungsform kann zuverlässig verhindert werden, dass die Drohne beim Fliegen entlang des Schachts über die Zielposition hinausfliegt.

Kurz zusammengefasst ermöglicht der hier vorgestellte Ansatz die Steuerung einer Drohne entlang eines Schachts mit minimalem Hardware- und/oder Softwareaufwand, indem bei gegebener Zielposition der Drohne lediglich deren Abstand zu zwei benachbarten Schachtwänden erfasst und ausgewertet zu werden braucht. Die aufwendige Erstellung einer digitalen Karte der Umgebung der Drohne im Flugbetrieb kann somit entfallen bzw. von einem mitgeführten Messsystem erledigt werden. Im Gegensatz zu gängigen Indoor-Drohnen, die in der Regel mit umfangreicher Sensorik und entsprechend aufwendiger Steuerungselektronik ausgestattet sind, können die Kosten für eine derart vereinfachte Drohne deutlich geringer ausfallen.

Ein zweiter Aspekt der Erfindung betrifft ein Steuergerät mit einem Prozessor, der konfiguriert ist, um das Verfahren gemäss einer Ausführungsform des ersten Aspekts der Erfindung auszuführen. Wie weiter oben erwähnt, kann das Steuergerät Hardware- und/oder Softwaremodule umfassen. Zusätzlich zum Prozessor kann das Steuergerät einen Speicher und Datenkommunikationsschnittstellen zur Datenkommunikation mit Peripheriegeräten umfassen. Merkmale des Verfahrens gemäss einer Ausführungsform des ersten Aspekts der Erfindung können auch Merkmale des Steuergeräts sein und umgekehrt.

Ein dritter Aspekt der Erfindung betrifft ein Drohnensteuerungssystem zum Ansteuern einer Aktorik einer Drohne. Das Drohnensteuerungssystem umfasst eine Sensorik zum Erfassen einer Umgebung und/oder eines Flugzustands einer Drohne und ein Steuergerät gemäss einer Ausführungsform des zweiten Aspekts der Erfindung. Merkmale des Verfahrens gemäss einer Ausführungsform des ersten Aspekts der Erfindung können auch Merkmale des Drohnensteuerungssystems sein und umgekehrt.

Ein vierter Aspekt der Erfindung betrifft eine Aufzugsanlage, beispielsweise einen Lasten- oder Personenaufzug. Die Aufzugsanlage umfasst zumindest einen Aufzugsschacht, der zumindest eine erste Schachtwand und eine an die erste Schachtwand angrenzende zweite Schachtwand aufweist, und mindestens eine entlang des Aufzugsschachts zu steuernde Drohne, die mit einer Aktorik zum Steuern der Drohne und einem Drohnensteuerungssystem zum Ansteuern der Drohne gemäss einer Ausführungsform des dritten Aspekts der Erfindung ausgestattet ist. Mittels der Drohne bzw. der Drohnen ist es beispielsweise möglich, den Aufzugsschacht zu vermessen und/oder zu inspizieren, insbesondere vor einer Installation von Elementen der Aufzugsanlage, beispielsweise von Führungsschienen oder Aufzugskabinen im Aufzugsschacht. Ferner kann die Drohne bzw. können die Drohnen konfiguriert sein, um Lasten durch den Aufzugsschacht zu transportieren, beispielsweise automatisiert in dem Aufzugsschacht aufzunehmen und/oder abzulegen.

Ein fünfter Aspekt der Erfindung betrifft ein Computerprogramm. Das Computerprogramm umfasst Befehle, die einen Prozessor bei Ausführung des Computerprogramms durch den Prozessor veranlassen, das Verfahren gemäss einer Ausführungsform des ersten Aspekts der Erfindung auszuführen.

Ein sechster Aspekt der Erfindung betrifft ein computerlesbares Medium, auf dem das Computerprogramm gemäss einer Ausführungsform des fünften Aspekts der Erfindung gespeichert ist. Das computerlesbare Medium kann ein flüchtiger oder nicht flüchtiger Datenspeicher sein. Beispielsweise kann das computerlesbare Medium eine Festplatte, ein USB-Speichergerät, ein RAM, ROM, EPROM oder Flash-Speicher sein. Das computerlesbare Medium kann auch ein einen Download eines Programmcodes ermöglichendes Datenkommunikationsnetzwerk wie etwa das Internet oder eine Datenwolke (Cloud) sein.

Merkmale des Verfahrens gemäss einer Ausführungsform des ersten Aspekts der Erfindung können auch Merkmale des Computerprogramms und/oder des computerlesbaren Mediums sein und umgekehrt.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäss einer Ausführungsform umfassen die Istabstände einen ersten Istabstand der Drohne relativ zur ersten Schachtwand in einer ersten Raumrichtung und einen zweiten Istabstand der Drohne relativ zur zweiten Schachtwand in einer zur ersten Raumrichtung orthogonalen zweiten Raumrichtung. Dabei wird das Steuersignal basierend auf einer Abweichung des ersten Istabstands von einem ersten Sollabstand und einer Abweichung des zweiten Istabstands von einem zweiten Sollabstand erzeugt.

Die erste Raumrichtung kann beispielsweise einer Breitenrichtung des Schachts entsprechen. Die zweite Raumrichtung kann beispielsweise einer Tiefenrichtung des Schachts entsprechen. Dabei kann das Steuersignal erzeugt werden, um die Drohne in Höhen- bzw. Längsrichtung des Schachts zu steuern. Der erste Istabstand und der zweite Istabstand können beispielsweise jeweils von einem 1D-Abstandssensor, etwa in Form eines Ultraschallsensors, erfasst worden sein. Wie bereits weiter oben erwähnt, ist aber auch die Verwendung eines 2D-Abstandssensors, etwa in Form eines Lidarsensors, zur Erfassung des ersten und zweiten Istabstands möglich. Das Steuersignal kann so erzeugt werden, dass die Abweichung der Ist- von den Sollabständen möglichst gering ist und/oder die Istabstände möglichst konstant sind. Der erste Sollabstand und der zweite Sollabstand können gleich oder verschieden sein. Durch diese Ausführungsform kann mit einfachen Mitteln vermieden werden, dass die Drohne beim Fliegen entlang des Schachts mit den Schachtwänden in Berührung kommt. Beispielsweise können der erste Sollabstand und der zweite Sollabstand so gewählt sein, dass die Drohne möglichst mittig im Schacht fliegt. Der erste Sollabstand und der zweite Sollabstand können aber auch beliebig anders gewählt sein. Es ist auch möglich, dass die Sollabstände während des Flugs der Drohne verändert werden. Dies kann beispielsweise in Abhängigkeit der Flughöhe, der Erkennung von Markierungen im Schacht oder manuell von einem menschlichen Bediener erfolgen.

Gemäss einer Ausführungsform umfassen die Istabstände einen zusätzlichen ersten Istabstand der Drohne relativ zur ersten Schachtwand in der ersten Raumrichtung. Dabei sind der erste Istabstand und der zusätzliche erste Istabstand unterschiedlichen Stellen der ersten Schachtwand zugeordnet. Basierend auf dem ersten Istabstand und dem zusätzlichen ersten Istabstand wird eine Istorientierung der Drohne bestimmt. Dabei wird das Steuersignal ferner basierend auf einer Abweichung der Istorientierung von einer Sollorientierung erzeugt. Beispielsweise kann die Drohne zur Erfassung des ersten Istabstands und des zusätzlichen ersten Istabstands zwei in einem definierten Abstand nebeneinander angeordnete 1D-Abstandssensoren aufweisen. Durch diese Ausführungsform kann die Istorientierung der Drohne, beispielsweise deren Gierwinkel, sehr einfach durch Berechnung einer Differenz zwischen dem ersten Istabstand und dem zusätzlichen ersten Istabstand bestimmt werden. Die beschriebene Bestimmung der Istorientierung der Drohne kann analog aus Messdaten eines 2D-Sensors bestimmt werden.

Gemäss einer Ausführungsform wird ferner ein dritter Istabstand der Drohne relativ zu einer Decke des Schachts durch Verarbeiten der Sensordaten bestimmt. Dabei wird das Steuersignal ferner basierend auf einer Abweichung des dritten Istabstands von einem dritten Sollabstand erzeugt. Die Sollflugstrecke kann beispielsweise durch den dritten Sollabstand definiert sein. Die Erfassung des dritten Istabstands kann beispielsweise mittels eines 1D-Abstandssensors oder eines eventuell schräg zur Decke ausgerichteten 2D-Abstandssensors erfolgen. Somit kann mit einfachen Mitteln sichergestellt werden, dass die Drohne nicht über die Zielposition hinausfliegt. Der dritte Sollabstand kann so gewählt sein, dass eine Berührung der Drohne mit der Decke oder eine zu grosse Annäherung der Drohne an die Decke verhindert wird. Somit können Beschädigungen der Drohne beim Fliegen entlang des Schachts vermieden werden.

Gemäss einer Ausführungsform wird ferner ein vierter Istabstand der Drohne relativ zu einem Boden des Schachts durch Verarbeiten der Sensordaten bestimmt. Dabei wird das Steuersignal ferner basierend auf einer Abweichung des vierten Istabstands von einem vierten Sollabstand erzeugt. Die Sollflugstrecke kann beispielsweise durch den vierten Sollabstand definiert sein. Die Erfassung des vierten Istabstands kann beispielsweise mittels eines 1D-Abstandssensors oder eines eventuell schräg zum Boden ausgerichteten 2D-Abstandssensors erfolgen. Somit kann mit einfachen Mitteln sichergestellt werden, dass die Drohne nicht über die Zielposition hinausfliegt. Auch kann somit eine sichere Landung der Drohne auf dem Boden des Schachts gewährleistet werden.

Die Drohne kann sich in einer Ausgangsposition beispielsweise auf dem Boden des Schachts befinden. Beispielsweise kann die Drohne in der Ausgangsposition mittig zwischen der ersten und zweiten Schachtwand oder versetzt zur Mitte zwischen der ersten und zweiten Schachtwand auf dem Boden des Schachts platziert sein. Das Steuersignal kann beispielsweise so erzeugt werden, dass die in der Ausgangsposition befindliche Drohne vom Boden des Schachts abhebt, bis zur Zielposition fliegt, von dort zurück zum Boden des Schachts fliegt und schliesslich auf dem Boden des Schachts landet. Mit dem beschriebenen Positionieren der Drohne auf dem Boden des Schachts werden die Sollabstände zu den Schachtwänden und eine Sollausrichtung der Drohne aus- bzw. festgelegt.

Gemäss einer Ausführungsform umfasst das Verfahren ferner einen Schritt des Generierens von Vermessungsdaten, die eine gemessene Breite, Tiefe und/oder Länge des Schachts umfassen, aus den Sensordaten. Hierzu können die Sensordaten durch das Steuergerät in geeigneter Weise gefiltert und/oder transformiert werden. Die Vermessungsdaten können beispielsweise Koordinaten einer Vielzahl von Messpunkten, die eine Geometrie des Schachts in einem dreidimensionalen Koordinatensystem abbildet, umfassen. Diese Ausführungsform ermöglicht somit eine automatisierte Vermessung des Schachts.

Gemäss einer Ausführungsform umfasst das Verfahren ferner einen Schritt des Sendens der Sensordaten und/oder von aus den Sensordaten generierten Daten von dem Steuergerät an eine externe Datenverarbeitungsvorrichtung. Die von dem Steuergerät gesendeten Sensordaten können beispielsweise Bilddaten des Schachts umfassen. Bei den aus den Sensordaten generierten Daten kann es sich beispielsweise um durch Filterung und/oder Transformation der Sensordaten erzeugte Daten, etwa um Vermessungsdaten, handeln. Das Senden kann beispielsweise im Flugbetrieb der Drohne erfolgen. Somit wird eine externe Auswertung der Sensordaten und/oder der aus den Sensordaten generierten Daten ermöglicht. Dies hat den Vorteil, dass die Hardware bzw. Software des Steuergeräts sehr einfach gehalten werden kann. Beispielsweise kann die externe Datenverarbeitungsvorrichtung konfiguriert sein, um aus den Sensordaten und/oder den aus den Sensordaten generierten Daten die Geometriedaten (siehe weiter oben) zu generieren.

Gemäss einer Ausführungsform umfasst die Sensorik eine Ultraschallsensorik und/oder eine Lasersensorik zum Erfassen der Umgebung der Drohne. Zusätzlich oder alternativ kann die Sensorik eine Beschleunigungssensorik zum Erfassen des Flugzustands der Drohne umfassen. Die Beschleunigungssensorik kann beispielsweise eine inertiale Messeinheit oder einen Gyroskopsensor umfassen. Beispielsweise können durch den Verzicht auf Kameras und auf eine satellitengestützte Ortung der Drohne die Herstellungskosten der Drohne stark verringert werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt schematisch eine Drohne mit einem Drohnensteuerungssystem gemäss einem Ausführungsbeispiel der Erfindung in einem Schacht.

Fig. 2 zeigt schematisch ein Drohnensteuerungssystem gemäss einem Ausführungsbeispiel der Erfindung in einer vergrösserten Darstellung.

Fig. 3 zeigt schematisch eine Aufzugsanlage gemäss einem Ausführungsbeispiel der Erfindung.

Fig. 4 zeigt eine Querschnittsansicht eines Aufzugsschachts aus Fig. 3.

Die Figuren sind lediglich schematisch und nicht massstabsgetreu. Gleiche Bezugszeichen bezeichnen in den verschiedenen Figuren gleiche oder gleichwirkende Merkmale.

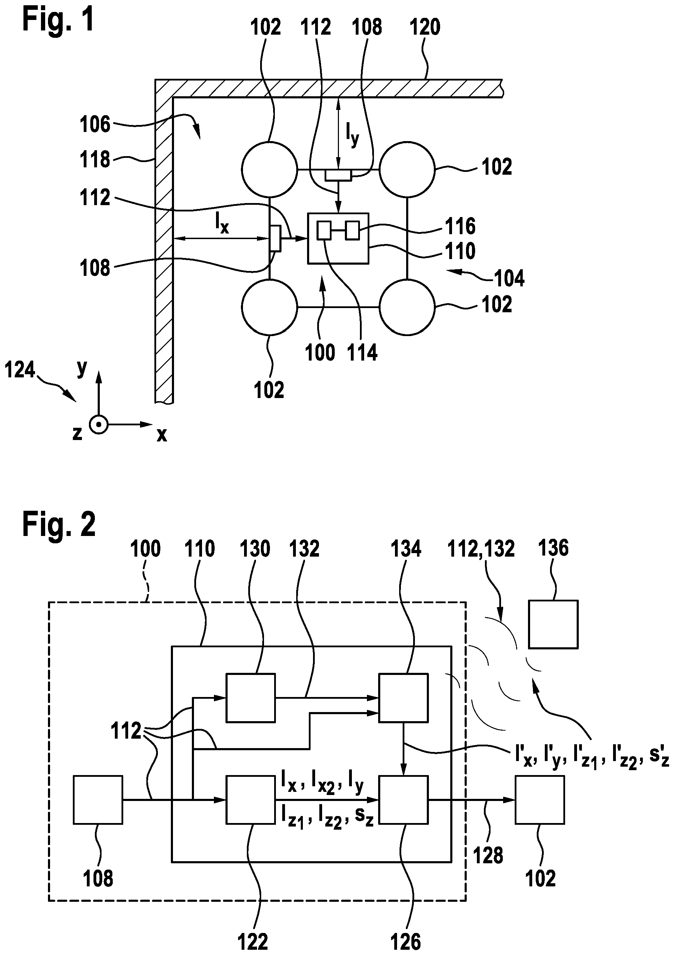

Fig. 1 und Fig. 2 zeigen ein Drohnensteuerungssystem 100 zum Ansteuern einer Aktorik 102 einer Drohne 104, hier beispielhaft eines Quadrocopters, dessen Aktorik 102 vier getrennt voneinander ansteuerbare Propellereinheiten umfasst. Die Drohne 104 befindet sich in einem Schacht 106, beispielsweise einem Aufzugs-, Lüftungs- oder Kabelschacht. Das Drohnensteuerungssystem 100 ist konfiguriert, um die Aktorik 102 so anzusteuern, dass die Drohne 104 entlang des Schachts 106, d. h. in Längsrichtung des Schachts 106, fliegt.

Hierzu umfasst das Drohnensteuerungssystem 100 eine Sensorik 108 zum Erfassen einer Umgebung und/oder eines Flugzustands der Drohne 104 sowie ein Steuergerät 110 zum Ansteuern der Aktorik 102 basierend auf Sensordaten 112, die von der Sensorik 108 beim Erfassen der Umgebung und/oder des Flugzustands der Drohne 104 erzeugt werden.

Die im Folgenden beschriebenen Module des Steuergeräts 110 können in Form eines entsprechenden Computerprogramms in einem Speicher 114 des Steuergeräts 110 gespeichert sein und durch Ausführen des Computerprogramms durch einen Prozessor 116 des Steuergeräts 110 ausgeführt werden (siehe Fig. 1). Es ist jedoch auch möglich, dass die Module als Hardware implementiert sind.

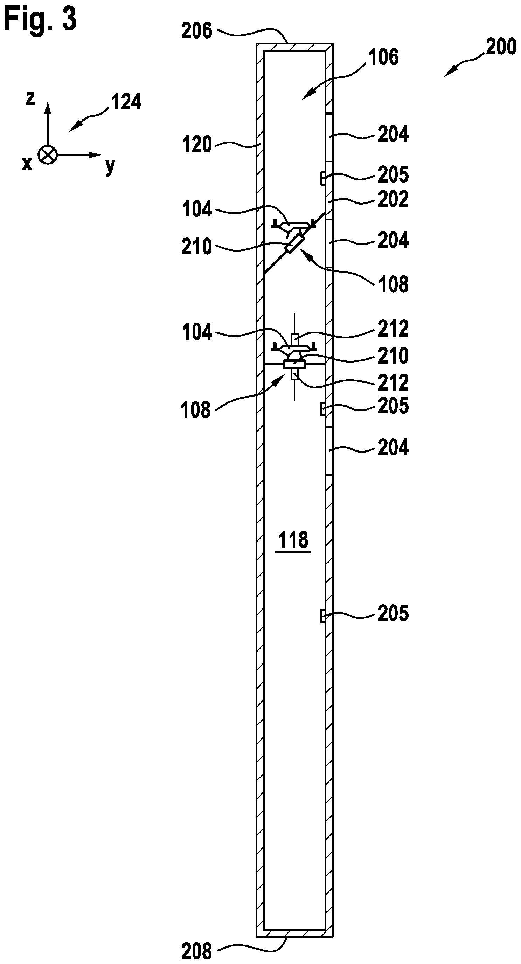

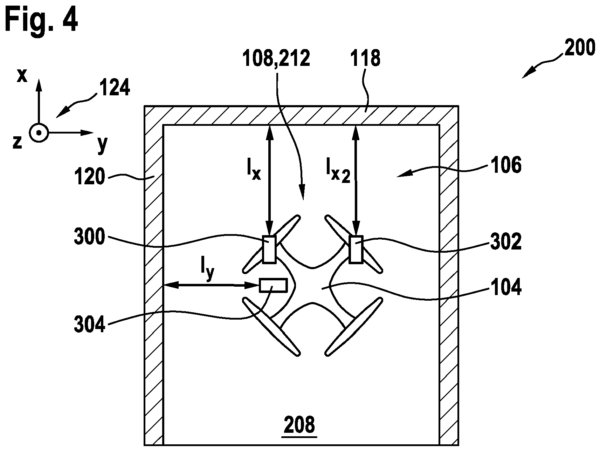

Der Schacht 106 umfasst in diesem Beispiel zwei Seitenwände in Form einer ersten Schachtwand 118 und einer zweiten Schachtwand 120, die an ihren Längskanten aneinandergrenzen. Die erste Schachtwand 118 und die zweite Schachtwand 120 sind hier beispielhaft senkrecht zueinander ausgerichtet. Es ist möglich, dass der Schacht 106 weitere Seitenwände, einen Boden und/oder eine Decke umfasst (siehe auch Fig. 3 und Fig. 4).

Zum Steuern der Drohne 104 entlang des Schachts 106 werden die Sensordaten 112 in ein Abstandsbestimmungsmodul 122 des Steuergeräts 110 (siehe Fig. 2) eingegeben, das konfiguriert ist, um Istabstände der Drohne 104 relativ zur ersten Schachtwand 118 und zur zweiten Schachtwand 120 aus den Sensordaten 112 zu bestimmen. In diesem Beispiel bestimmt das Abstandsbestimmungsmodul 122 die Istabstände in einem dreidimensionalen $x, y, z$-Koordinatensystem 124. Dabei werden ein erster Istabstand $I_x$ relativ zur ersten Schachtwand 118 in Richtung einer x-Achse des Koordinatensystems 124 und ein zweiter Istabstand $I_y$ relativ zur zweiten Schachtwand 120 in Richtung einer y-Achse des Koordinatensystems 124 bestimmt.

Die Istabstände $I_x$, $I_y$ werden anschliessend in ein Steuersignalgeneriermodul 126 des Steuergeräts 110 eingegeben, das konfiguriert ist, um aus den Istabständen $I_x$, $I_y$, den Istabständen $I_x$, $I_y$ zugeordneten Sollabständen $l'_x, l'_y$ sowie einer Sollflugstrecke $s'_z$, die die Drohne 104 beim Fliegen entlang des Schachts 106, d. h. in z-Richtung, bis zum Erreichen einer Zielposition zurücklegen soll, ein Steuersignal 128 zum Ansteuern der Aktorik 102 zu generieren. Das Steuersignal 128 veranlasst die Aktorik 102, die Drohne 104 so zu steuern, dass sie sich unter Berücksichtigung der Sollflugstrecke $s'_z$ und der Sollabstände $l'_x, l'_y$ in z-Richtung im Schacht 106 fortbewegt. Hierzu bestimmt das Steuersignalgeneriermodul 126 eine Abweichung des ersten Istabstands

$l_x$ von einem ersten Sollabstand $l'_x$ und eine Abweichung des zweiten Istabstands $l_y$ von einem zweiten Sollabstand $l'_y$ und erzeugt das Steuersignal 128 basierend auf diesen Abweichungen.

Zusätzlich kann das Abstandsbestimmungsmodul 122 konfiguriert sein, um durch Verarbeiten der Sensordaten 112 einen dritten Istabstand $l_{z_1}$ relativ zu einer Decke 206 (siehe Fig. 3) des Schachts 106 und/oder einen vierten Istabstand $l_{z_2}$ relativ zu einem Boden 208 (siehe Fig. 3 und Fig. 4) des Schachts 106 in Richtung einer z-Achse des Koordinatensystems 124 zu bestimmen. Dementsprechend kann das Steuersignalgeneriermodul 126 konfiguriert sein, um das Steuersignal 128 zusätzlich basierend auf dem dritten Istabstand $l_{z_1}$ und/oder dem vierten Istabstand $l_{z_2}$, etwa basierend auf einer Abweichung des dritten Istabstands $l_{z_1}$ von einem dritten Sollabstand $l'_{z_1}$ und/oder einer Abweichung des vierten Istabstands $l_{z_2}$ von einem vierten Sollabstand $l'_{z_2}$, zu generieren.

Möglich ist beispielsweise auch, dass durch Verarbeiten der Sensordaten 112 in dem Abstandsbestimmungsmodul 122 eine Istflugstrecke $s_z$ der Drohne 104, d. h. ein von der Drohne 104 in z-Richtung zurückgelegter Weg bzw. eine aktuelle Höhe der Drohne 104 in dem Schacht 106, bestimmt wird. In diesem Fall kann das Steuersignalgeneriermodul 126 konfiguriert sein, um das Steuersignal 128 zusätzlich basierend auf der Istflugstrecke $s_z$, genauer basierend auf einer Abweichung der Istflugstrecke $s_z$ von der Sollflugstrecke $s'_z$, zu generieren.

Zusätzlich kann das Steuergerät 110 ein Vermessungsmodul 130 zum Umwandeln der Sensordaten 112 in Vermessungsdaten 132 umfassen, beispielsweise durch entsprechendes Filtern und/oder Transformieren der Sensordaten 112. Die Vermessungsdaten 132 können eine gemessene Geometrie des Schachts 106 in dem Koordinatensystem 124, beispielsweise dessen Breite, Tiefe und/oder Länge bzw. Höhe, anzeigen.

Es ist ferner möglich, dass die Sensordaten 112 und/oder aus den Sensordaten 112 generierte Daten wie beispielsweise die Vermessungsdaten 132 über ein Kommunikationsmodul 134 des Steuergeräts 110 zur externen Speicherung und/oder Weiterverarbeitung an eine externe Datenverarbeitungsvorrichtung 136 gesendet werden, hier beispielhaft über eine drahtlose Datenkommunikationsverbindung wie WLAN, Bluetooth, Mobilfunk o. Ä. Die externe Datenverarbeitungsvorrichtung 136 kann beispielsweise ein Server, PC, Laptop, Smartphone, Tablet o. Ä. sein.

Alternativ oder zusätzlich ist es möglich, dass das Kommunikationsmodul 134 Daten von der externen Datenverarbeitungsvorrichtung 136 empfängt. Dies können beispielsweise Werte für die Sollabstände $l'_x, l'_y, l'_{z_1}$ und/oder $l'_{z_2}$ und/oder die Sollflugstrecke $s'_z$ oder Geometriedaten bezüglich des Schachts 106, aus denen diese Werte generiert werden sollen, sein.

Fig. 3 zeigt Teile einer Aufzugsanlage 200. In diesem Beispiel ist der Schacht 106 ein vertikaler Aufzugsschacht 106 der Aufzugsanlage 200. Dabei weist eine der zweiten Schachtwand 120 gegenüberliegende dritte Schachtwand 202 des Aufzugsschachts 106 eine Mehrzahl von Türbereichen 204 mit jeweils einer Türöffnung auf, über die der Aufzugsschacht 106 von aussen, etwa von verschiedenen Stockwerken eines Gebäudes aus, zugänglich ist. Beispielsweise kann das Abstandsbestimmungsmodul 122 konfiguriert sein, um die Istflugstrecke $s_z$, die hier einer Istflughöhe der Drohne 104 entspricht, durch Erkennen der Türbereiche 204 in den Sensordaten 112 zu bestimmen. Gezeigt sind ferner eine Decke 206 und ein Boden 208 des Aufzugsschachts 106.

Im oder am Aufzugsschacht 106 können Höhenmarkierungen 205 angeordnet sein, die festgelegte Positionen bzw. Höhen im Aufzugsschacht 106 kennzeichnen. Dabei kann es sich beispielsweise um sogenannte Meterrisse handeln. Beispielsweise kann das Abstandsbestimmungsmodul 122 konfiguriert sein, um die Istflugstrecke $s_z$, die hier einer Istflughöhe der Drohne 104 entspricht, durch Erkennen der Höhenmarkierungen 205 in den Sensordaten 112 zu bestimmen.

Die Aufzugsanlage 200 umfasst ferner die mit dem Drohnensteuerungssystem 100 und der Aktorik 102 ausgestattete Drohne 104 oder auch mehrere davon. Beispielsweise kann die Drohne 104 entlang des Aufzugsschachts 106 auf und ab bewegt werden, um das Innere des Aufzugsschachts 106 zu inspizieren und/oder eine automatisierte Vermessung des Aufzugsschachts 106 vorzunehmen, wie bereits weiter oben erwähnt.

Darüber hinaus sind in Fig. 3 zwei beispielhafte Konfigurationen der Sensorik 108 zum Erfassen der Umgebung der Drohne 104 gezeigt.

Eine obere der zwei Konfigurationen umfasst eine Lidarsensorik 210 als 2D-Abstandssensor. Die Lidarsensorik 210 ist in diesem Beispiel konfiguriert, um Abstände in einer oder mehreren schrägen Ebenen zu erfassen. Unter "schräger Ebene" ist hier eine Ebene zu verstehen, die alle drei Ebenen des Koordinatensystems 124 schneidet. Beispielsweise kann die Lidarsensorik 210 so an der Drohne 104 angeordnet sein, dass sie im Flugbetrieb der Drohne 104 diagonal zu einer Vertikalen, hier zur z-Achse, ausgerichtet ist. Ein Erfassungswinkel der Lidarsensorik 210 kann beispielsweise zwischen 90 und 360 Grad liegen. Damit ist es möglich, gleichzeitig Abstände zu den Schachtwänden 118, 120, 202, zur Decke 206 und zum Boden 208 zu erfassen.

Eine untere der zwei Konfigurationen umfasst zusätzlich zur Lidarsensorik 210 als 2D-Abstandssensor eine Ultraschallsensorik 212 mit zwei in entgegengesetzte Richtungen weisenden 1D-Abstandssensoren zum Erfassen von Abständen zur Decke 206 bzw. zum Boden 208. In dieser Konfiguration ist die Lidarsensorik 210 konfiguriert, um Abstände in einer oder mehreren zur $x$, $y$-Ebene parallelen Ebenen zu erfassen.

Eine weitere mögliche Konfiguration der Ultraschallsensorik 212 ist in Fig. 4 gezeigt. In diesem Beispiel umfasst die Ultraschallsensorik 212 einen ersten 1D-Abstandssensor 300 zum Erfassen des ersten Istabstands $l_x$, einen zweiten 1D-Abstandssensor 302 zum Erfassen eines zusätzlichen ersten Istabstands $l_{x2}$ relativ zur ersten Schachtwand 118 in x-Richtung und einen dritten 1D-Abstandssensor 304 zum Erfassen des zweiten Istabstands $l_y$. Wie in Fig. 4 zu erkennen, sind der erste Istabstand $l_x$ und der zusätzliche erste Istabstand $l_{x2}$ unterschiedlichen Stellen der ersten Schachtwand 118 zugeordnet. Dementsprechend kann das Steuersignalgeneriermodul 126 konfiguriert sein, um eine Istorientierung der Drohne 104, etwa einen Gierwinkel bezüglich der $z$-Achse, basierend auf dem ersten Istabstand $l_x$ und dem zusätzlichen ersten Istabstand $l_{x2}$ zu bestimmen und das Steuersignal 128 basierend auf einer Abweichung der Istorientierung von einer entsprechenden Sollorientierung zu erzeugen.

Zum Steuern der Drohne 104 in dem Aufzugsschacht 106 kann das Steuergerät 110 beispielsweise einen Horizontalregler zum Regeln des Abstands der Drohne 104 zu den zwei Schachtwänden 118, 120 und einen Geschwindigkeitsregler zum Regeln einer Vertikalgeschwindigkeit der Drohne 104 unter Berücksichtigung der Sollflugstrecke $s_z'$ umfassen. Dabei kann die Vertikalgeschwindigkeit anfangs konstant gehalten und kurz vor Erreichen der Zielposition, d. h. kurz vor Erreichen des Endes des Aufzugsschachts 106, verringert werden.

Die Vertikalgeschwindigkeit kann beispielsweise als fixer Vorschub definiert sein. Eine Istgeschwindigkeit der Drohne 104 kann beispielsweise durch Integration von Beschleunigungswerten einer Beschleunigungssensorik, durch Ableiten von Höhenwerten eines Höhensensors, etwa in Form eines Luftdrucksensors, oder inkrementell durch Auswerten von in den Sensordaten 112 enthaltenen Kamerabildern bestimmt werden.

Ein beispielhafter Ablauf eines Flugmanövers der Drohne 104 ist im Folgenden beschrieben.

1. Die Drohne 104 wird auf dem Boden 208 positioniert und ausgerichtet.

2. Der Horizontalregler wird genullt bzw. initialisiert.

3. Die Drohne 104 fliegt mit konstanter Vertikalgeschwindigkeit entlang des Aufzugsschachts 106 nach oben, d. h. in Richtung der Decke 206.

4. Die Decke 206 wird durch die Sensorik 108 erfasst. Dementsprechend wird die Vertikalgeschwindigkeit bis zum Stillstand der Drohne 104 in der Luft verringert. Anschliessend fliegt die Drohne 104 zurück in Richtung des Bodens 208.

5. Der Boden 208 wird durch die Sensorik 108 erfasst. Dementsprechend wird die Vertikalgeschwindigkeit bis zum Stillstand der Drohne 104 in der Luft verringert oder zumindest so stark verringert, dass sich die Drohne 104 sehr langsam auf den Boden 208 zubewegt. Anschliessend landet die Drohne 104 sanft auf dem Boden 208.

Für die Abstandsmessung können alternativ oder zusätzlich Stereokameras, Tiefenkameras, Tracking-Sensoren und/oder Time-of-Flight-Sensoren eingesetzt werden.

Es ist möglich, dass die Position der Drohne 104 im Aufzugsschacht 106 basierend auf visueller Odometrie, gegebenenfalls unterstützt durch eine inertiale Messeinheit, bestimmt wird. Eine Positionsänderung bezüglich einer Referenzposition der Drohne 104, etwa deren Ausgangsposition am Boden 208, kann dann mittels zeitlicher Nachverfolgung von in den Sensordaten 112 erkannten Merkmalen, etwa der Türbereiche 204 oder spezieller Höhenmarkierungen 205 im Aufzugsschacht 106, oder anhand eines optischen Flusses berechnet werden.

Die Drohne 104 kann zusätzlich oder alternativ zu dem anhand von Fig. 1, Fig. 2, Fig. 3 und Fig. 4 beschriebenen Verfahren zum (automatisierten) Steuern der Drohne 104 durch einen menschlichen Bediener fernsteuerbar sein. Der menschliche Bediener stellt dabei die Flughöhe, die Geschwindigkeit und/oder die Ausrichtung der Drohne ein und die Abstände zu den Schachtwänden automatisch werden eingestellt. Zusätzlich können Kollisionen mit dem Boden und der Decke des Schachts automatisch verhindert werden. Dies kann als ein semi-automatischer Betrieb bezeichnet werden.

Abschliessend wird darauf hingewiesen, dass Begriffe wie "aufweisend", "umfassend" etc. keine anderen Elemente oder Schritte ausschliessen und Begriffe wie "eine" oder "ein" keine Vielzahl ausschliessen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer der obigen Ausführungsbeispiele verwendet werden können. Bezugszeichen in den Ansprüchen sind nicht als Einschränkung anzusehen.

**Patentansprüche**

1. Verfahren zum Steuern einer Drohne (104) entlang eines Schachts (106), wobei der Schacht (106) zumindest eine erste Schachtwand (118) und eine an die erste Schachtwand (118) angrenzende zweite Schachtwand (120) aufweist, wobei die Drohne (104) eine Sensorik (108; 210, 212; 300, 302, 304) zum Erfassen einer Umgebung und/oder eines Flugzustands der Drohne (104), eine Aktorik (102) zum Steuern der Drohne (104) und ein Steuergerät (110) zum Ansteuern der Aktorik (102) aufweist, wobei das Verfahren umfasst:

Empfangen von Sensordaten (112), die durch die Sensorik (108; 210, 212; 300, 302, 304) erzeugt wurden, in dem Steuergerät (110); Bestimmen von Istabständen ($l_x$, $l_{x2}$, $l_y$) der Drohne (104) relativ zur ersten Schachtwand (118) und zur zweiten Schachtwand (120) durch Verarbeiten der Sensordaten (112); und Erzeugen eines Steuersignals (128) zum Ansteuern der Aktorik (102), sodass die Drohne (104) entlang des Schachts (106) fliegt, basierend auf einer Abweichung der Istabstände ($l_x$, $l_y$) von Sollabständen ($l'_x, l'_y$) und einer Sollflugstrecke ($s'_z$), die die Drohne (104) bis zum Erreichen einer Zielposition im Schacht (106) zurücklegen soll, wobei eine Istflugstrecke ($s_z$) der Drohne (104) durch Verarbeiten der Sensordaten (112) bestimmt und das Steuersignal (128) basierend auf einer Abweichung der Istflugstrecke ($s_z$) von der Sollflugstrecke ($s'_z$) erzeugt wird, **dadurch gekennzeichnet, dass** Türbereiche (204) im Schacht (106) durch Verarbeiten der Sensordaten (112) erkannt werden und die Istflugstrecke ($s_z$) basierend auf den durch Verarbeiten der Sensordaten (112) erkannten Türbereichen (204) bestimmt wird.

2. Verfahren nach Anspruch 1, wobei Höhenmarkierungen (205) im Schacht (106) durch Verarbeiten der Sensordaten (112) erkannt werden und die Istflugstrecke ($s_z$) basierend auf den durch Verarbeiten der Sensordaten (112) erkannten Höhenmarkierungen (205) bestimmt wird.

3. Verfahren nach Anspruch 1 oder 2,

wobei die Istabstände ($l_x$, $l_{x2}$, $l_y$) einen ersten Istabstand ($l_x$) der Drohne (104) relativ zur ersten Schachtwand (118) in einer ersten Raumrichtung ($x$) und einen zweiten Istabstand ($l_y$) der Drohne (104) relativ zur zweiten Schachtwand (120) in einer zur ersten Raumrichtung ($x$) orthogonalen zweiten Raumrichtung ($y$) umfassen;
wobei das Steuersignal (128) basierend auf einer Abweichung des ersten Istabstands ($l_x$) von einem ersten Sollabstand ($l'_x$) und einer Abweichung des zweiten Istabstands ($l_y$) von einem zweiten Sollabstand ($l'_y$) erzeugt wird.

4. Verfahren nach Anspruch 3,

wobei die Istabstände ($l_x$, $l_{x2}$, $l_y$) einen zusätzlichen ersten Istabstand ($l_{x2}$) der Drohne (104) relativ zur ersten Schachtwand (118) in der ersten Raumrichtung ($x$) umfassen, wobei der erste Istabstand ($l_x$) und der zusätzliche erste Istabstand ($l_{x2}$) unterschiedlichen Stellen der ersten Schachtwand (118) zugeordnet sind;
wobei eine Istorientierung der Drohne (104) basierend auf dem ersten Istabstand ($l_x$) und dem zusätzlichen ersten Istabstand ($l_{x2}$) bestimmt wird;
wobei das Steuersignal (128) ferner basierend auf einer Abweichung der Istorientierung von einer Sollorientierung erzeugt wird.

5. Verfahren nach einem der vorhergehenden Ansprüche,

wobei ferner ein dritter Istabstand ($l_{z1}$) der Drohne (104) relativ zu einer Decke (206) des Schachts (106) durch Verarbeiten der Sensordaten (112) bestimmt wird;
wobei das Steuersignal (128) ferner basierend auf einer Abweichung des dritten Istabstands ($l_{z1}$) von einem dritten Sollabstand ($l'_{z1}$) erzeugt wird.

6. Verfahren nach einem der vorhergehenden Ansprüche,

wobei ferner ein vierter Istabstand ($l_{z2}$) der Drohne (104) relativ zu einem Boden (208) des Schachts (106) durch Verarbeiten der Sensordaten (112) bestimmt wird;
wobei das Steuersignal (128) ferner basierend auf einer Abweichung des vierten Istabstands ($l_{z2}$) von einem vierten Sollabstand ($l'_{z2}$) erzeugt wird.

7. Verfahren nach einem der vorhergehenden Ansprüche, ferner umfassend:
Generieren von Vermessungsdaten (132), die eine gemessene Breite, Tiefe und/oder Länge des Schachts (106) umfassen, aus den Sensordaten (112).

8. Verfahren nach einem der vorhergehenden Ansprüche, ferner umfassend:
Senden der Sensordaten (112) und/oder von aus den Sensordaten (112) generierten Daten (132) von dem Steuergerät (110) an eine externe Datenverarbeitungsvorrichtung (136).

9. Steuergerät (110), umfassend einen Prozessor (116), der konfiguriert ist, um das Verfahren nach einem der vorhergehenden Ansprüche auszuführen.

10. Drohnensteuerungssystem (100) zum Ansteuern einer Aktorik (102) einer Drohne (104), wobei das Drohnensteuerungssystem (100) umfasst:

eine Sensorik (108; 210, 212; 300, 302, 304) zum Erfassen einer Umgebung und/oder eines Flugzustands einer Drohne (104); und
ein Steuergerät (110) nach Anspruch 9.

11. Drohnensteuerungssystem (100) nach Anspruch 10,

wobei die Sensorik (108; 210, 212; 300, 302, 304) eine Ultraschallsensorik (212; 300, 302, 304) und/oder eine Lasersensorik (210) zum Erfassen der Umgebung der Drohne (104) umfasst; und/oder
wobei die Sensorik (108; 210, 212; 300, 302, 304) eine Beschleunigungssensorik zum Erfassen des Flugzustands der Drohne (104) umfasst.

12. Aufzugsanlage (200), umfassend:

einen Aufzugsschacht (106), der zumindest eine erste Schachtwand (118) und eine an die erste Schachtwand (118) angrenzende zweite Schachtwand (120) aufweist; und
mindestens eine entlang des Aufzugsschachts (106) zu steuernde Drohne (104), die mit einer Aktorik (102) zum Steuern der Drohne (104) und einem Drohnensteuerungssystem (100) nach Anspruch 10 oder 11 zum Ansteuern der Aktorik (102) ausgestattet ist.

13. Computerprogramm, umfassend Befehle, die einen Prozessor (116) bei Ausführung des Computerprogramms durch den Prozessor (116) veranlassen, das Verfahren nach einem der Ansprüche 1 bis 8 auszuführen.

14. Computerlesbares Medium, auf dem das Computerprogramm nach Anspruch 13 gespeichert ist.

**Claims**

1. Method for controlling a drone (104) along a shaft (106), the shaft (106) having at least a first shaft wall (118) and a second shaft wall (120) adjoining the first shaft wall (118), the drone (104) having a sensor system (108; 210, 212; 300, 302, 304) for detecting an environment and/or a state of flight of the drone (104), an actuator system (102) for controlling the drone (104), and a control device (110) for controlling the actuator system (102), the method comprising:

receiving sensor data (112) which have been generated by the sensor system (108; 210, 212; 300, 302, 304), in the control device (110);
determining actual distances ($l_x$, $l_{x2}$, $l_y$) of the drone (104) relative to the first shaft wall (118) and to the second shaft wall (120) by processing the sensor data (112); and
generating a control signal (128) for actuating the actuator system (102) such that the drone (104) flies along the shaft (106), on the basis of a deviation of the actual distances ($l_x$, $l_y$) from target distances ($l'_x$, $l'_y$) and a target flight route ($s'_z$) which the drone (104) is to cover until reaching a target position in the shaft (106),
an actual flight route ($s_z$) of the drone (104) being determined by processing the sensor data (112), and the control signal (128) being generated on the basis of a deviation of the actual flight route ($s_z$) from the target flight route ($s'_z$),
**characterized in that**
door regions (204) in the shaft (106) are recognized by processing the sensor data (112), and the actual flight route ($s_z$) is determined on the basis of the door regions (204) recognized by processing the sensor data (112).

2. Method according to claim 1,
wherein height markings (205) in the shaft (106) are recognized by processing the sensor data (112), and the actual flight route ($s_z$) is determined on the basis of the height markings (205) recognized by processing the sensor data (112).

3. Method according to claim 1 or 2,

wherein the actual distances ($l_x$, $l_{x2}$, $l_y$) comprise a first actual distance ($l_x$) of the drone (104) relative to the first shaft wall (118) in a first spatial direction ($x$) and a second actual distance ($l_y$) of the drone (104) relative to the second shaft wall (120) in a second spatial direction ($y$) orthogonal to the first spatial direction ($x$);
wherein the control signal (128) is generated on the basis of a deviation of the first actual distance ($l_x$) from a first target distance ($l'_x$) and a deviation of the second actual distance ($l_y$) from a sec-

**4.** Method according to claim 3,

wherein the actual distances ($l_x$, $l_{x2}$, $l_y$) comprise an additional first actual distance ($l_{x2}$) of the drone (104) relative to the first shaft wall (118) in the first spatial direction (x),

wherein the first actual distance ($l_x$) and the additional first actual distance ($l_{x2}$) are assigned to different locations on the first shaft wall (118);

wherein an actual orientation of the drone (104) is determined on the basis of the first actual distance ($l_x$) and the additional first actual distance ($l_{x2}$);

wherein the control signal (128) is further generated on the basis of a deviation of the actual orientation from a target orientation.

**5.** Method according to any of the preceding claims,

wherein furthermore a third actual distance ($l_{z1}$) of the drone (104) relative to a ceiling (206) of the shaft (106) is determined by processing the sensor data (112);

wherein the control signal (128) is further generated on the basis of a deviation of the third actual distance ($l_{z1}$) from a third target distance ($l'_{z1}$).

**6.** Method according to any of the preceding claims,

wherein furthermore a fourth actual distance ($l_{z2}$) of the drone (104) relative to a floor (208) of the shaft (106) is determined by processing the sensor data (112);

wherein the control signal (128) is further generated on the basis of a deviation of the fourth actual distance ($l_{z2}$) from a fourth target distance ($l'_{z2}$).

**7.** Method according to any of the preceding claims, further comprising:
generating measurement data (132) comprising a measured width, depth and/or length of the shaft (106) from the sensor data (112).

**8.** Method according to any of the preceding claims, further comprising:
transmitting the sensor data (112) and/or data (132) generated from the sensor data (112) from the control device (110) to an external data processing device (136).

**9.** Control device (110) comprising a processor (116) configured to carry out the method according to any of the preceding claims.

**10.** Drone control system (100) for actuating an actuator system (102) of a drone (104), wherein the drone control system (100) comprises:

a sensor system (108; 210, 212; 300, 302, 304) for detecting an environment and/or a state of flight of a drone (104); and
a control device (110) according to claim 9.

**11.** Drone control system (100) according to claim 10,

wherein the sensor system (108; 210, 212; 300, 302, 304) comprises an ultrasonic sensor system (212; 300, 302, 304) and/or a laser sensor system (210) for detecting the environment of the drone (104); and/or

wherein the sensor system (108; 210, 212; 300, 302, 304) comprises an acceleration sensor system for detecting the state of flight of the drone (104).

**12.** Elevator system (200), comprising:

an elevator shaft (106) having at least a first shaft wall (118) and a second shaft wall (120) adjoining the first shaft wall (118); and
at least one drone (104) to be controlled along the elevator shaft (106), which drone is equipped with an actuator system (102) for controlling the drone (104) and a drone control system (100) according to either claim 10 or claim 11 for actuating the actuator system (102).

**13.** Computer program comprising commands that cause a processor (116) to carry out the method according to any of claims 1 to 8 when the computer program is executed by the processor (116).

**14.** Computer-readable medium on which the computer program according to claim 13 is stored.

**Revendications**

**1.** Procédé permettant de commander un drone (104) le long d'une cage (106), dans lequel la cage (106) présente au moins une première paroi de cage (118) et une seconde paroi de cage (120) adjacente à la première paroi de cage (118), dans lequel le drone (104) présente un ensemble de capteurs (108 ; 210, 212 ; 300, 302, 304) permettant de détecter un environnement et/ou un état de vol du drone (104), un actionneur (102) permettant de commander le drone (104) et un appareil de commande (110) permettant de commander l'actionneur (102), dans lequel le procédé comprend :

la réception, dans l'appareil de commande (110), de données de capteur (112) qui ont été générées par l'ensemble de capteurs (108 ; 210, 212 ; 300, 302, 304) ;

la détermination de distances réelles ($l_x$, $l_{x2}$, $l_y$) du drone (104) par rapport à la première paroi de cage (118) et à la seconde paroi de cage (120) par traitement des données de capteur (112) ; et

la génération d'un signal de commande (128) permettant de commander l'actionneur (102) de sorte que le drone (104) vole le long de la cage (106), sur la base d'un écart entre les distances réelles ($l_x$, $l_y$) et les distances de consigne ($l'_x$, $l'_y$) et d'un trajet de vol de consigne ($s'_z$) que le drone (104) doit parcourir jusqu'à atteindre une position cible dans la cage (106),

dans lequel un trajet de vol réel ($s_z$) du drone (104) est déterminé par traitement des données de capteur (112), et le signal de commande (128) est généré sur la base d'un écart entre le trajet de vol réel ($s_z$) et le trajet de vol de consigne ($s'_z$),

**caractérisé en ce que**

des zones de porte (204) dans la cage (106) sont identifiées par traitement des données de capteur (112), et le trajet de vol réel ($s_z$) est déterminé sur la base des zones de porte (204) identifiées par traitement des données de capteur (112).

2. Procédé selon la revendication 1,
dans lequel des indicateurs de hauteur (205) dans la cage (106) sont identifiés par traitement des données de capteur (112), et le trajet de vol réel ($s_z$) est déterminé sur la base des indicateurs de hauteur (205) identifiés par traitement des données de capteur (112).

3. Procédé selon la revendication 1 ou 2,

dans lequel les distances réelles ($l_x$, $l_{x2}$, $l_y$) comprennent une première distance réelle ($l_x$) du drone (104) par rapport à la première paroi de cage (118) dans une première direction spatiale ($x$) et une deuxième distance réelle ($l_y$) du drone (104) par rapport à la seconde paroi de cage (120) dans une seconde direction spatiale ($y$) orthogonale à la première direction spatiale ($x$) ;
dans lequel le signal de commande (128) est généré sur la base d'un écart entre la première distance réelle ($l_x$) et une première distance de consigne ($l'_x$) et d'un écart entre la deuxième distance réelle ($l_y$) et une deuxième distance de consigne ($l'_y$).

4. Procédé selon la revendication 3,

dans lequel les distances réelles ($l_x$, $l_{x2}$, $l_y$) comprennent une première distance réelle supplémentaire ($l_{x2}$) du drone (104) par rapport à la première paroi de cage (118) dans la première direction spatiale ($x$), dans lequel la première distance réelle ($l_x$) et la première distance réelle supplémentaire ($l_{x2}$) sont associées à différents emplacements de la première paroi de cage (118) ;
dans lequel une orientation réelle du drone (104) est déterminée sur la base de la première distance réelle ($l_x$) et de la première distance réelle supplémentaire ($l_{x2}$) ;
dans lequel le signal de commande (128) est en outre généré sur la base d'un écart entre l'orientation réelle et une orientation de consigne.

5. Procédé selon l'une des revendications précédentes,

dans lequel, en outre, une troisième distance réelle ($l_{z1}$) du drone (104) par rapport à un plafond (206) de la cage (106) est déterminée par traitement des données de capteur (112) ;
dans lequel le signal de commande (128) est en outre généré sur la base d'un écart entre la troisième distance réelle ($l_{z1}$) et une troisième distance de consigne ($l'_{z1}$).

6. Procédé selon l'une des revendications précédentes,

dans lequel, en outre, une quatrième distance réelle ($l_{z2}$) du drone (104) par rapport à un sol (208) de la cage (106) est déterminée par traitement des données de capteur (112) ;
dans lequel le signal de commande (128) est en outre généré sur la base d'un écart entre la quatrième distance réelle ($l_{z2}$) et une quatrième distance de consigne ($l'_{z2}$).

7. Procédé selon l'une des revendications précédentes, comprenant en outre :
la génération, à partir des données de capteur (112), de données topographiques (132) qui comprennent une largeur, une profondeur et/ou une longueur mesurées de la cage (106).

8. Procédé selon l'une des revendications précédentes, comprenant en outre :
l'envoi des données de capteur (112) et/ou de données (132) générées à partir des données de capteur (112) à un dispositif de traitement de données (136) externe, en provenance de l'appareil de commande (110).

9. Appareil de commande (110) comprenant un processeur (116) configuré pour mettre en oeuvre le procédé selon l'une des revendications précédentes.

**10.** Système de commande de drone (100) permettant de commander un actionneur (102) d'un drone (104), dans lequel le système de commande de drone (100) comprend :

> un ensemble de capteurs (108 ; 210, 212 ; 300, 302, 304) permettant de détecter un environnement et/ou un état de vol d'un drone (104) ; et un appareil de commande (110) selon la revendication 9.

**11.** Système de commande de drone (100) selon la revendication 10,

> dans lequel l'ensemble de capteurs (108 ; 210, 212 ; 300, 302, 304) comprend un ensemble de capteurs à ultrasons (212 ; 300, 302, 304) et/ou un ensemble de capteurs à laser (210) permettant de détecter l'environnement du drone (104) ; et/ou
> dans lequel l'ensemble de capteurs (108 ; 210, 212 ; 300, 302, 304) comprend un ensemble de capteurs d'accélération permettant de détecter l'état de vol du drone (104).

**12.** Installation d'ascenseur (200), comprenant :

> une cage d'ascenseur (106) qui présente au moins une première paroi de cage (118) et une seconde paroi de cage (120) adjacente à la première paroi de cage (118) ; et
> au moins un drone (104) à commander le long de la cage d'ascenseur (106), lequel drone est équipé d'un actionneur (102) permettant de commander le drone (104) et d'un système de commande de drone (100) selon la revendication 10 ou 11, permettant de commander l'actionneur (102).

**13.** Programme informatique comprenant des instructions qui, lorsque le programme informatique est exécuté par un processeur (116), amènent le processeur (116) à exécuter le procédé selon l'une des revendications 1 à 8.

**14.** Support lisible par ordinateur, sur lequel est stocké le programme informatique selon la revendication 13.

**Fig. 1**

**Fig. 2**

# Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3489184 A1
- JP 2017226259 A
- EP 3739420 A1
- JP 2017128440 A